# EUROPÄISCHE PATENTSCHRIFT

(11) **EP 2 689 964 B1**
(45) Veröffentlichungstag und Bekanntmachung des Hinweises auf die Patenterteilung: **16.01.2019**
(21) Anmeldenummer: 13176892.1
(22) Anmeldetag: 17.07.2013
(51) Int. Cl.: B60P 7/13

(54) **Containerverriegelung**
Container locking
Verrouillage de container

(30) Priorität: 25.07.2012 DE 102012213104
(43) Veröffentlichungstag der Anmeldung: 29.01.2014
(73) Patentinhaber: JOST-Werke Deutschland GmbH, 63263 Neu-Isenburg (DE)
(72) Erfinder: Algüera, José Manuel, 63739 Aschaffenburg (DE); Eiermann, Michael, 64319 Pfungstadt (DE); Albers, Stephan, 32361 Pr. Oldendorf (DE); Paulekuhn, Hans-Peter, 34454 Bad Arolsen (DE)
(74) Vertreter: Mehler Achler

(56) Entgegenhaltungen:
- WO-A1-2011/071384
- DE-U1-202011 050 490
- US-A- 5 570 981

## Beschreibung

Die Erfindung betrifft eine Verriegelungsvorrichtung für Container gemäß dem Oberbegriff des Anspruchs 1, ein Containerverriegelungsgehäuse, eine Containerverriegelungskassette sowie eine Anordnung von Verriegelungsvorrichtungen. Die DE 20 2011 050 490 U1 wird als nächstliegender Stand der Technik gegenüber dem Gegenstand der unabhängigen Ansprüche angesehen.

Der Transport von Containern erfolgt unter anderem auf Straßenfahrzeugen, auf denen die Container auf einfache und sichere Weise befestigt werden müssen. Die Fahrzeuge verfügen daher über geeignete Verriegelungsvorrichtungen, die mit den Eckbeschlägen der Container zusammenwirken.

Weit verbreitet sind so genannte Twist-Lock-Einrichtungen, die einen Verriegelungszapfen und einen pilzförmigen Kopf aufweisen. Dieser Verriegelungszapfen wird in den Eckbeschlag eingeführt, gedreht und in dieser Verriegelungsstellung gespannt. Eine solche Verriegelungsvorrichtung ist beispielsweise aus der DE 20 2009 016 268 U1 bekannt. Solche Vorrichtungen haben den Nachteil, dass sie von Hand betätigt werden müssen.

Die DE 20 2010 005 717 U1 offenbart eine Verriegelungsvorrichtung, die eine automatische Verriegelung bei der Beladung mit Sperrung der Verriegelungsposition und ein halbautomatisches Entladen erlaubt, indem vor dem Entladevorgang ein Sperrmittel freigegeben wird. Die Vorrichtung weist einen, insbesondere zwei Verriegelungshebel auf, die in einer Scherenanordnung um eine gemeinsame, in vertikaler Richtung wandernde Achse in entgegengesetzte Richtungen schwenkbar angeordnet sind. Unterhalb der Achse sind die unteren Schenkel der Verriegelungshebel zum oberen Schenkel abgewinkelt ausgebildet, wobei an den unteren Schenkeln über jeweils ein Gelenk jeweils ein Kniehebel schwenkbar angelenkt ist. Die Kniehebel sind an einem ortsfesten Fixpunkt im Gehäuse der Verriegelungsvorrichtung schwenkbar gelagert. Ferner ist im Gehäuse der Verriegelungsvorrichtung ein Sperrmittel in Gestalt eines verschiebbar geführten Riegels angeordnet, der mittels Feder in Richtung seiner Sperrstellung federvorbelastet ist. Durch Niederdrücken eines Auslösers beim Aufsetzen des Containers wird die Sperre des Riegels gelöst, so dass dieser durch die gespannte Druckfeder vorschnellt und die gemeinsame Achse des Scherengelenkes in ihrer vertikalen Bewegung hindert und diese somit blockiert.

Diese Vorrichtung hat den Nachteil, dass der Kniehebel- und Scherenmechanismus aufwendig und damit teuer in der Herstellung sowie störanfällig ist. Außerdem werden die Verriegelungshebel in Verriegelungsstellung nur blockiert aber nicht verspannt, so dass im Betrieb die Eckbeschläge wackeln können und ein fester Sitz des Containers nicht gewährleistet werden kann.

Um dieses Problem bei solchen hakenartigen Verriegelungsvorrichtungen zu lösen, wurde bereits vorgeschlagen, lediglich einen einzigen Verriegelungshaken vorzusehen und diesen Haken als Hebel erster Klasse auszubilden, der in einer ortsfesten Drehachse im Gehäuse schwenkbar gelagert ist. Mittels einer Spindel, die am unteren Ende des Verriegelungshakens angreift, kann mittels Werkzeug und von Hand der Verschlusshaken in seine Verriegelungsstellung gebracht und nach Eingreifen in den Eckbeschlag auch gegen den Eckbeschlag nach unten gedrückt werden. Diese Vorrichtung hat den Nachteil, dass die Vorrichtung nicht automatisch in ihre Verriegelungsstellung fällt und dass das Drehen der Spindel zum Verriegeln, Spannen und Entriegeln des Hakens zeitaufwändig ist.

Es ist Aufgabe der Erfindung, eine Container-Verriegelungsvorrichtung bereitzustellen, die bei einfachem Aufbau automatisch verriegelt und einen festen Sitz des Containers gewährleistet.

Diese Aufgabe wird mit den Merkmalen des Anspruchs 1 gelöst.

Die Erfindung geht von einem Verriegelungshaken aus, der einen Hakenkörper, ein Hakenelement und eine Drehachse aufweist und der um eine relativ zu einem Containerverriegelungsgehäuse ortsfeste Achse in eine Bereitschaftsstellung und in eine Verriegelungsstellung schwenkbar ist. Ein einziger Verriegelungshaken ermöglicht einen einfachen Aufbau und eine einfache Anordnung im Gehäuse der Verriegelungsvorrichtung.

Dieser Verriegelungshaken kann ein-, zwei- oder mehrteilig ausgeführt sein. Bei der mehrteiligen Ausführung werden zwei oder mehrere schmalere als Verriegelungshaken ausgebildete Teile, d. h. Verriegelungshaken mit geringerer Breite, gebildet. Die Gesamtbreite der Teile entspricht vorzugsweise der Breite eines einteiligen Verriegelungshakens. Bei der mehrteiligen Ausführung weisen die Hakenelemente der einzelnen Teile des Verriegelungshakens in dieselbe Richtung und die Teile des Verriegelungshakens werden gemeinsam um dieselbe ortsfeste Drehachse in dieselbe Richtung verschwenkt.

Diese mehrteilige Ausführung des Verriegelungshakens hat Vorteile bei der Fertigung, wobei Kosten reduziert werden können. Außerdem ist das Risiko eines Komplettausfalls der Funktion bei Bauteilversagen durch den redundanten Aufbau des Verriegelungshakens reduziert.

Die Betätigungseinrichtung umfasst die Bauteile, die für die Betätigung des Verriegelungshakens, wie Sperren, Freigeben usw. erforderlich sind. Die Betätigungseinrichtung weist ein erstes Stellelement, ein zweites Stellelement und eine Auslöseeinrichtung auf.

Das Vorsehen von zwei separaten Stellelementen und deren Zuordnung zur Bereitschaftsstellung des Verriegelungshakens einerseits und zur Verriegelungsstellung des Verriegelungshakens andererseits hat den Vorteil, dass die Stellelemente individuell an die unterschiedlichen Aufgaben angepasst werden können.

Das erste Stellelement ist derart ausgebildet, dass es den Verriegelungshaken in seiner Bereitschaftsstellung hält. Dieses Halten kann auch ein Sperren in der Bereitschaftsstellung umfassen im Sinne eines unverrückbaren Fixierens.

Bei einem Verriegelungshaken, der beispielsweise aufgrund der Anordnung seines Schwerpunktes gravitationsgetrieben von seiner Bereitschaftsstellung in seine Verriegelungsstellung fällt, reicht es aus, dass das erste Stellelement der Gravitationskraft entgegenwirkt und ein ungewolltes Verschwenken in die Verriegelungsstellung verhindert.

Das zweite Stellelement ist derart ausgebildet, dass es den Verriegelungshaken in seiner Verriegelungsstellung nicht nur sperrt, sondern auch spannt. Dadurch werden Klappergeräusche, die durch einen lockeren Sitz des Containers auf der Verriegelungsvorrichtung entstehen, verhindert und ein fester Sitz des Containers gewährleistet.

Die Auslöseeinrichtung ist vorteilhafterweise durch den Container betätigbar. Die Auslöseeinrichtung wird beim Aufsetzen auf die Ladefläche, insbesondere durch den betreffenden Beschlag des Containers, ausgelöst, so dass über das Zusammenwirken der Auslöseeinrichtung mit dem ersten Stellelement und/oder dem zweiten Stellelement das Sperren und Spannen des Verriegelungshakens automatisch, d. h. ohne manuelle Einwirkung abläuft.

Die Auslöseeinrichtung kann gemäß einer ersten Ausführungsvariante am ersten Stellelement angreifen. In diesem Fall wirkt das erste Stellelement vorzugsweise auf das zweite Stellelement ein oder das erste Stellelement ist vorzugsweise mit dem zweiten Stellelement gekoppelt oder an diesem angeordnet.

Gemäß einer zweiten Ausführungsvariante kann die Auslöseeinrichtung am zweiten Stellelement angreifen. In diesem Fall wirkt vorzugsweise das zweite Stellelement auf das erste Stellelement ein oder das zweite Stellelement ist vorzugsweise mit dem ersten Stellelement gekoppelt oder an diesem angeordnet.

Erstes und zweites Stellelement sind vorzugsweise über ein Verbindungselement miteinander gekoppelt.

Gemäß einer dritten Variante sind das erste und zweite Stellelement vollständig unabhängig voneinander beweglich angeordnet. In diesem Fall wirkt die Auslöseeinrichtung vorzugsweise auf beide Stellelemente ein.

Das erste Stellelement verfügt vorzugsweise über eine eigene erste Federeinrichtung, so dass das erste Stellelement federvorgespannt ist, wenn es sich in der Position befindet, in der das erste Stellelement den Verriegelungshaken in seiner Bereitschaftsstellung hält.

Die Stellelemente bzw. die an ihnen wirkenden Kräfte können auch so aufeinander abgestimmt sein, dass bei Betätigung der Auslöseeinrichtung das zweite Stellelement der Kraft der Federeinrichtung des ersten Stellelementes entgegenwirkt und deren Wirkung auf den Verriegelungshaken in der Folge aufhebt. Das Auslösen der Auslöseeinrichtung bewirkt, dass automatisch das erste Stellelement die Bereitschaftsstellung des Verriegelungshakens freigibt, so dass dieser sich in seine Verriegelungsstellung bewegen kann. Das erste Stellelement ist daher vorzugsweise in eine Freigabe- und in eine Halteposition bewegbar, wobei es in seiner Halteposition den Haken in der Bereitschaftsstellung hält. Die automatische Bewegung des ersten Stellelementes aus seiner Haltestellung heraus hängt davon ab, ob z. B. eine Kopplung mit dem zweiten Stellelement vorgesehen ist oder nicht.

Bevorzugt ist das erste Stellelement am zweiten Stellelement angekoppelt, insbesondere angeordnet, so dass eine automatische Bewegung des zweiten Stellelements auch eine automatische Bewegung des ersten Stellelementes zur Folge hat.

Das erste Stellelement ist vorzugsweise ein Federelement. Dies hat den Vorteil, dass der Verriegelungshaken in seiner Bereitschaftsstellung gespannt ist und somit z. B. ein Spiel oder ein Wackeln des Verriegelungshakens vermieden wird.

Das zweite Stellelement ist vorzugsweise in eine Ruheposition und in eine Sperrposition bewegbar. Um einen automatischen Ablauf zu bewirken, ist vorzugsweise eine zweite Federeinrichtung vorgesehen, die das zweite Stellelement nach dem Auslösen der Auslöseeinrichtung in seine Sperrposition zieht, in der das zweite Stellelement den Verriegelungshaken in seiner Verriegelungsstellung sperrt und spannt.

Die Entriegelung des Verriegelungshakens erfolgt halbautomatisch, vorzugsweise mittels einer Manipuliereinrichtung, die noch erläutert wird.

Vorzugsweise ist der Verriegelungshaken ein Hebel, dessen Drehachse an einem zweiten Ende des Hebels angeordnet ist, wobei das Hakenelement an einem ersten Ende des Hebels angeordnet ist. Die Kraftverhältnisse eines solchen Verriegelungshebels sind günstiger als bei einem Hebel erster Klasse, bei dem die Drehachse zwischen den Hebelenden angeordnet ist. Ein weiterer Vorteil besteht darin, dass die Drehachse tiefer in das Gehäuse verlegt werden kann, wodurch sich für den Ort der Anbringung der Schwenkhalterung mehr Möglichkeiten eröffnen. Die Schwenkhalterung ist vorzugsweise im Gehäuse an einer Wand angeordnet, bevorzugt ist die Schwenkhalterung an der Rückwand des Gehäuses vorgesehen.

Vorzugsweise weist der Verriegelungshaken zwischen dem ersten und dem zweiten Ende ein Betätigungsmittel auf. Diese Anordnung hat den Vorteil, dass an dem Betätigungsmittel beide Stellelemente angreifen können. In Bereitschaftsstellung des Verriegelungshakens greift das erste Stellelement vorzugsweise an der Unterseite des Betätigungsmittels an und in Sperrstellung des Verriegelungshakens greift das zweite Stellelement vorzugsweise an der Oberseite des Betätigungsmittels an.

Vorzugsweise ist das Betätigungsmittel ein stabförmiges Element, das parallel zur Drehachse angeordnet ist.

Das stabförmige Element kann integraler Bestandteil des Hakenkörpers sein. Es ist auch möglich, dass das stabförmige Element an dem Hakenkörper angeschraubt ist.

Eine bevorzugte Ausführungsform des Hebels sieht vor, dass der Hakenkörper unter einem Winkel angeordnete Schenkel aufweist, wobei am freien Ende des ersten Schenkels das Hakenelement und am freien Ende des zweiten Schenkels die Drehachse angeordnet ist. Vorzugsweise ist im Verbindungsbereich der Schenkel das Betätigungsmittel angeordnet.

Diese geknickte Ausführungsform des Hebels hat nicht nur den Vorteil, dass die Hebelkräfte optimiert werden können, sondern auch den Vorteil, dass sowohl der Ort der Drehachse als auch der Ort des Betätigungsmittels innerhalb des Gehäuses an die Platzverhältnisse innerhalb des Gehäuses angepasst und optimiert werden können.

Vorzugsweise fällt der Verriegelungshaken in Einbaulage des Gehäuses gravitationsgetrieben in die Verriegelungsstellung. Da der Verriegelungshebel ein Hebel mit Drehachse am Ende des Hebels ist, ist der Abstand des Schwerpunktes von der Drehachse groß, so dass in Bereitschaftsstellung nur eine geringe Neigung des Verriegelungshakens, bezogen auf die Verbindungslinie, aus der Senkrechten erforderlich ist, damit der Verriegelungshakens bei Freigabe der Bereitschaftsstellung mittels des ersten Stellelementes gravitationsgetrieben und somit automatisch in seine Sperrstellung fällt.

Gegebenenfalls kann es von Vorteil sein, wenn der Verriegelungshaken in seine Bereitschaftsstellung mittels vorzugsweise einer Federeinrichtung vorgespannt ist. Die Schwenkbewegung in die Verriegelungsstellung kann dadurch unterstützt werden oder auch vollständig bewirkt werden. Dies kann dann von Vorteil sein, wenn die Verriegelungsvorrichtung aufgrund einer Schrägstellung der Ladefläche, an der die Verriegelungsvorrichtung angebracht ist, geneigt ausgerichtet ist., so dass zusätzliche Kräfte erforderlich sind, damit der Verriegelungshaken in seine Verriegelungsstellung fällt.

Vorzugsweise weist das zweite Stellelement eine Kurvenfläche auf, die am Verriegelungshaken direkt oder indirekt angreift und den Verriegelungshaken sperrt und spannt.

Eine Kurvenfläche kann eine gekrümmte Fläche sein, die z. B. einen vorgegebenen Radius aufweist oder die eine Freiformfläche ist. Eine Kurvenfläche kann auch eine Fläche mit zwei oder mehreren ebenen Flächenabschnitten sein. Eine Kurvenfläche kann auch die Kombination aus mindestens einer gekrümmten Fläche und mindestens einer ebenen Fläche sein.

Vorzugsweise weist die Kurvenfläche mindestens einen Abschnitt zum kraftschlüssigen Spannen und Sperren des Verriegelungshakens auf.

Dieser Abschnitt ist vorzugsweise eine Schräge, die bei einer translatorischen Bewegung des zweiten Stellelementes das Betätigungsmittel des Verriegelungshakens überläuft und mit zunehmender Vorwärtsbewegung das Betätigungsmittel und somit den Verriegelungshaken zunehmend z. B. in Einbaulage der Verriegelungsvorrichtung nach unten drückt, wodurch - bei bereits am Beschlag anliegendem Hakenelement - die Verspannung des Beschlags und somit des Containers bewirkt wird.

Dieser Abschnitt kann im Falle eines anderen Bewegungsablaufs des zweiten Stellelementes, z. B. bei einer rotatorischen Bewegung entsprechend anders ausgestaltet sein.

Der Abschnitt der Kurvenfläche ist vorzugsweise derart ausgeführt, dass bei fortschreitender Bewegung des zweiten Stellelementes in seine Sperrposition die Kraft auf das Betätigungsmittel zunimmt.

Vorzugsweise weist die Kurvenfläche mindestens einen Abschnitt zum formschlüssigen Sperren des Verriegelungshakens auf. Dieser Abschnitt ist vorzugsweise in Bewegungsrichtung des zweiten Stellelementes vor dem Abschnitt zum Sperren und Spannen angeordnet, so dass dann, wenn sich die Verspannung unbeabsichtigt lösen sollte, nach wie vor eine Sperrung des Verriegelungshakens gewährleistet wird.

Vorzugsweise ist das zweite Stellelement ein Riegel, der in Ruhe- und Sperrstellung translatorisch verfahrbar ist. Die translatorische Bewegung ermöglicht eine einfache Ausgestaltung der Abschnitte zum Sperren und Spannen sowie nur zum Sperren. Diese Abschnitte können als gerade oder ebene Flächen ausgeführt werden.

Vorzugsweise ist der Riegel ein Keil.

Vorzugsweise sind zwei Riegel nebeneinander angeordnet und über ein Verbindungselement miteinander verbunden. Diese Ausführungsform des zweiten Stellelementes hat den Vorteil, dass bei Ausfall eines Riegels oder nicht optimaler Verspannung eines Riegels kein Totalausfall eintritt.

Vorzugsweise ist im Gehäuse eine Führungseinrichtung vorgesehen, in der das zweite Stellelement verschiebbar gelagert ist.

Das zweite Stellelement ist in der Ruheposition vorzugsweise mittels einer zweiten Federeinrichtung vorgespannt.

Vorzugsweise ist das zweite Stellelement in einer ersten Ruheposition mittels eines Arretierungselementes arretierbar. Nach dem Auslösen der Auslöseeinrichtung wird diese Arretierung gelöst und das zweite Stellelement wird mittels der zweiten Federeinrichtung in die Sperrposition bewegt. Die Kraft der Federeinrichtung wird vorzugsweise so eingestellt, dass eine ausreichende Verspannung über die Kurvenfläche ermöglicht wird. Die Federeinrichtung und die Kurvenfläche sind entsprechend aufeinander abzustimmen.

Vorzugsweise ist das Arretierungselement von der Auslöseeinrichtung zur Freigabe des zweiten Stellelementes betätigbar.

Gemäß einer weiteren Ausführungsform wird das zweite Stellelement in einer zweiten Ruheposition mittels einer Sperrklinke gehalten. Die Sperrklinke kommt dann zum Einsatz, wenn mittels der Manipuliereinrichtung eine Entsperrung vorgenommen wird, aber der Container noch nicht von der Verriegelungsvorrichtung abgenommen worden ist. Dies wird zusammen mit der Manipuliereinrichtung näher erläutert.

Vorzugsweise ist die Sperrklinke schwenkbar gelagert und fällt gravitationsgetrieben oder federbelastet in ihre Sperrposition. Die Sperrklinke ist vorzugsweise zum Gehäuse ortsfest schwenkbar gelagert.

In ihrer Sperrposition greift die Sperrklinke vorzugsweise in eine Ausnehmung des zweiten Stellelementes ein.

Vorzugsweise ist die Sperrklinke von außen zugänglich und manuell in die entriegelnde Stellung bewegbar. Wenn das zweite Stellelement manuell in seine Ruheposition gefahren wird, so dass sich der Verriegelungshaken in seiner Bereitschaftsstellung befindet, aber der Container nicht entfernt wird, bleibt die Auslöseeinrichtung im ausgelösten Zustand. Wenn diese Entriegelung wieder rückgängig gemacht werden soll, ist es erforderlich, dass die Sperrklinke manuell in ihre Freigabeposition bewegt wird. Danach kann das zweite Stellelement mittels der zweiten Federeinrichtung in seine Sperrposition bewegt werden.

Vorzugswiese ist die Sperrklinke mittels der Auslöseeinrichtung betätigbar. Wenn die Auslöseeinrichtung sich in den auszulösenden Zustand bewegt, wird die Sperrklinke in ihre Freigabeposition bewegt.

Vorzugsweise ist eine Manipuliereinrichtung für das erste Stellelement und/oder das zweite Stellelement vorgesehen, wobei die Manipuliereinrichtung vorzugsweise mit einer dritten Federeinrichtung versehen ist. Mittels der Manipuliereinrichtung wird die Entriegelung des Verriegelungshakens vorgenommen, was vorzugsweise halbautomatisch erfolgt. Mittels der Manipuliereinrichtung, die manuell von ihrer Ruheposition in eine Entriegelungsposition gezogen wird, wird vorzugsweise das zweite Stellelement aus der Sperrposition in die Ruheposition bewegt, wodurch der Verriegelungshaken automatisch in Bereitschaftsstellung bewegt wird. Das zweite Stellelement wird in seiner Ruheposition festgelegt. Danach wird die Manipuliereinrichtung mittels der dritten Federeinrichtung in ihre Ruheposition automatisch zurückgezogen.

Die Manipuliereinrichtung ist vorzugsweise parallel zur Deckwand des Gehäuses verschiebbar. Vorzugsweise weist die Manipuliereinrichtung mindestens eine Führungsbahn oder Kulisse auf, mittels der sie verschiebbar an dem zweiten Stellelement gelagert ist, wobei das Ende der Führungsbahn ein Widerlager zur Mitnahme des zweiten Stellelementes darstellt.

Vorzugsweise hält die dritte Federeinrichtung die Manipuliereinrichtung in ihrer Ruheposition.

Vorzugsweise weist die Auslöseeinrichtung einen Auslösestift auf. Hierzu ist vorzugsweise in einer Gehäusewand eine Öffnung für den Auslösestift vorgesehen. Der Auslösestift ist in eine ausgelenkte Auslöseposition und in eine eingezogene Position bewegbar.

Der Auslösestift ist mittels einer ersten Federvorrichtung seiner Auslöseposition vorgespannt.

Beim Aufsetzen des Containers auf die Verriegelungsvorrichtung wird der Auslösestift gegen die Kraft der Feder bewegt, womit der Auslösevorgang erfolgt.

Vorzugsweise ist an einer Gehäusewand eine Verriegelungsanzeigeeinrichtung vorgesehen, die dem Benutzer signalisiert, ob die Verriegelung des Verriegelungshakens stattgefunden hat oder nicht.

Die Verriegelungsanzeigeeinrichtung umfasst vorzugsweise einen vorgespannten Stift, der sich durch eine Gehäusewand nach außen erstreckt.

Die Verriegelungsanzeigeeinrichtung wird vorzugsweise durch das erste oder das zweite Stellelement direkt oder indirekt betätigt.

Vorzugsweise sind auf der Deckwand des Gehäuses zwei den Verriegelungshaken flankierende aufragende Führungselemente angeordnet. Dadurch wird die Einführung in den Beschlag eines Containers erleichtert und der Verriegelungshaken vor Beschädigungen geschützt. Vorzugsweise überragen die Führungselemente den Verriegelungshaken.

Die Federelemente können vorzugsweise an ihrem freien Ende über eine Brücke miteinander verbunden sein. Die Brücke ist vorzugsweise kegel- oder pyramidenförmig ausgebildet, damit die Einführung in die Öffnung des Beschlages erleichtert wird.

Vorzugsweise ist die Betätigungseinrichtung in einer Kassette angeordnet, die in das Gehäuse einsetzbar ist. Mittels der Kassette kann die gesamte Betätigungseinrichtung entnommen werden. Im Gehäuse sind lediglich der Verriegelungshaken und gegebenenfalls die Verriegelungsanzeigeeinrichtung angeordnet. Wartungs- und Reparaturarbeiten an der Betätigungseinrichtung können somit auf einfache Weise an der aus dem Gehäuse herausgezogenen Kassette vorgenommen werden.

Das Containerverriegelungsgehäuse zur Aufnahme einer Containerverriegelungskassette mit mindestens einer Deckwand, zwei Seitenwänden und einer Rückwand sowie mit einem sich durch die Deckwand erstreckenden Verriegelungshaken, der einen Hakenkörper, ein Hakenelement und eine Drehachse aufweist, die relativ zum Gehäuse ortsfest ist und um die der Verriegelungshaken in eine Bereitschaftsstellung und eine Verriegelungsstellung schwenkbar ist, ist dadurch gekennzeichnet, dass die Drehachse des Verriegelungshakens parallel zur Deckwand angeordnet ist und dass an einer Gehäusewand eine Schwenkhalterung für die schwenkbare Lagerung des Verriegelungshakens vorgesehen ist.

Die Containerverriegelungskassette zum Einsetzen in ein Containerverriegelungsgehäuse ist dadurch gekennzeichnet, dass sie eine Montageplatte aufweist, an der drei Baugruppen angeordnet sind, die eine Betätigungseinrichtung für einen Verriegelungshaken bilden, wobei eine erste Baugruppe eine Auslöseeinrichtung mit einer ersten Federeinrichtung aufweist, wobei eine zweite Baugruppe ein erstes Stellelement und ein parallel zur Montageplatte verschiebbares zweites Stellelement mit einer zweiten Federeinrichtung aufweist, und wobei eine dritte Baugruppe eine Manipuliereinrichtung für das erste und/oder zweite Stellelement mit einer dritten Federeinrichtung aufweist.

Eine Anordnung von Verriegelungsvorrichtungen an einer Containerladefläche sieht vor, dass die Verriegelungsvorrichtung am Rand der Ladefläche jeweils paarweise gegenüberliegend angeordnet ist und die Hakenelemente jedes Vorrichtungspaares in entgegengesetzte Richtungen weisen.

Diese Anordnung hat die Vorteile, dass die Stellung des jeweiligen Hakens bei geladenem Container für den Fahrer von außen erkennbar ist und dass bei Kurvenfahrt auf den Container wirkende Zentrifugalkräfte besser aufgenommen werden können.

Beispielhafte Ausführungsformen der Erfindung werden nachfolgend anhand der Zeichnungen näher erläutert.

Es zeigen:
- Figur 1: einen Ausschnitt einer Ansicht der Rückseite eines Aufliegers mit aufgesetztem Container,
- Figur 2: eine Verriegelungsvorrichtung in perspektivischer Darstellung gemäß einer ersten Ausführungsform,
- Figur 3: die in Figur 2 gezeigte Verriegelungsvorrichtung im zusammengebauten Zustand,
- Figur 4: eine perspektivische Darstellung eines Verriegelungshakens,
- Figur 5: die Unteransicht eines Gehäuses einer Verriegelungsvorrichtung mit Verriegelungshaken,
- Figur 6: die Unteransicht einer Kassette,
- Figur 7a: eine perspektivische Darstellung einer ersten Baugruppe,
- Figur 7b: eine Seitenansicht einer ersten Baugruppe,
- Figur 8a: eine perspektivische Darstellung einer zweiten Baugruppe,
- Figur 8b: eine perspektivische Darstellung eines zweiten Stellelementes,
- Figur 9: eine perspektivische Darstellung einer dritten Baugruppe,
- Figur 10: eine Seitenansicht einer Verriegelungsvorrichtung in Bereitschaftsstellung,
- Figur 11: eine weitere Seitenansicht einer Verriegelungsvorrichtung bei Betätigung der Auslöseeinrichtung,
- Figur 12: eine Seitenansicht einer Verriegelungsvorrichtung in einer Zwischenstellung,
- Figur 13: eine perspektivische Darstellung einer Verriegelungsvorrichtung in Verriegelungsstellung,
- Figur 14: eine Seitenansicht einer Verriegelungsvorrichtung beim Entriegeln,
- Figur 15: eine Seitenansicht einer Verriegelungsvorrichtung nach dem Entriegeln,
- Figur 16: eine perspektivische Darstellung einer Verriegelungsvorrichtung beim Entriegeln, und
- Figur 17: eine vergrößerte Darstellung der Einzelheit X aus Figur 16 mit Blick auf die Sperrklinke.

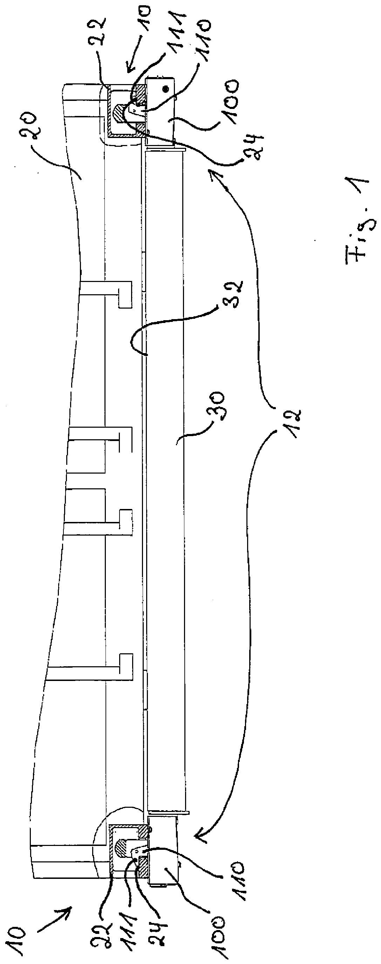

In der Figur 1 ist ein Ausschnitt aus der Ansicht der Rückseite eines Sattelaufliegers 30 mit auf einer Ladefläche 32 aufgesetztem Container 20 dargestellt, wobei die Eckbeschläge 22 des Containers 20 im Schnitt dargestellt sind.

Die beiden am Auflieger 30 gegenüberliegend montierten Verriegelungsvorrichtungen 10 bilden ein Verriegelungsvorrichtungspaar 12. Jede Verriegelungsvorrichtung 10 weist ein Containerverriegelungsgehäuse 100 mit einem Verriegelungshaken 110 auf. Im Containerverriegelungsgehäuse 100 ist eine Betätigungseinrichtung 210 für den Verriegelungshaken 110 angeordnet, die im Zusammenhang mit den übrigen Figuren näher erläutert wird.

Die Verriegelungshaken 110 greifen in die jeweiligen Eckbeschläge 22 ein, wobei die Hakenelemente 111 auf die Verriegelungsfläche 24 des Bodens 23 des Eckbeschlags 22 drücken. Aufgrund der Verspannung der Verriegelungshaken 110 wird der Container 20 vertikal spielfrei und sicher gehalten.

Die Verriegelungsvorrichtungen 10 sind derart angeordnet, dass die Hakenelemente 111 des Verriegelungsvorrichtungspaars 12 jeweils nach außen und somit in entgegengesetzte Richtung weisen. Die gezeigte Anordnung hat die Vorteile, dass die Stellung des jeweiligen Hakens bei geladenem Container für den Fahrer von außen erkennbar ist und dass bei Kurvenfahrt auf den Container wirkende Zentrifugalkräfte besser aufgenommen werden können.

Es ist auch möglich, dass beide Hakenelemente eines Paars 12 nach innen weisend angeordnet sind.

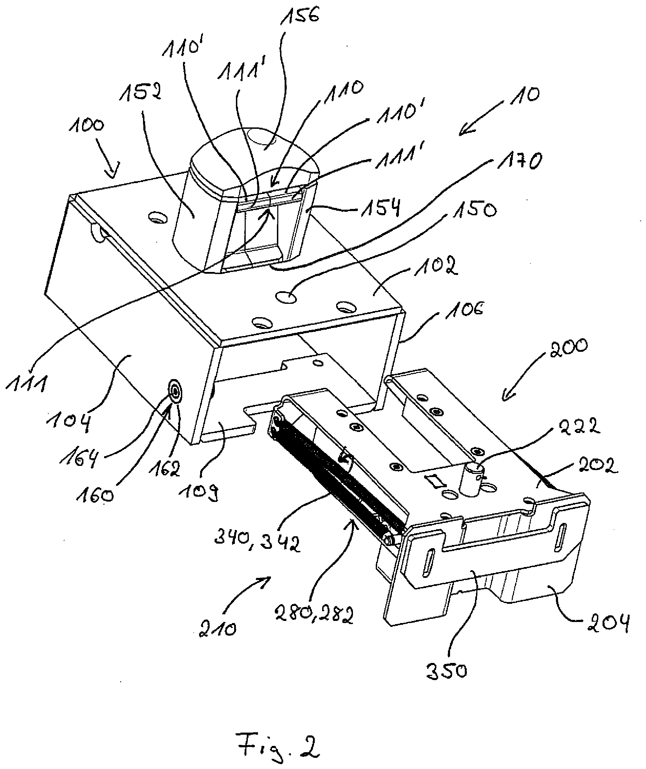

Die Verriegelungsvorrichtung 10 wird anhand der Figuren 2 bis 17 im einzelnen anhand einer ersten Ausführungsvariante - so genannten Kassettenvariante - erläutert, die aus zwei Bauteilen, nämlich dem Containerverriegelungsgehäuse 100 mit dem Verriegelungshaken 110 sowie der Containerverriegelungskassette 200 besteht, die die gesamte Betätigungseinrichtung 210 für den Verriegelungshaken 110 beinhaltet. Diese Containerverriegelungskassette 200 ist als Einschubbauteil ausgeführt, das ähnlich einer Schublade als vormontierte Einheit zur Montage in das Containerverriegelungsgehäuse 100 der Verriegelungsvorrichtung 10 eingeschoben werden kann. Durch Herausziehen aus dem Containerverriegelungsgehäuse 100 kann die Containerverriegelungskassette 200 entnommen werden.

Das Containerverriegelungsgehäuse 100 weist eine Deckwand 102, zwei Seitenwände 104, 106, eine Rückwand 108 und eine Bodenwand 109 auf. Die genannten Wände müssen nicht vollständig geschlossen sein. In der Seitenwand 104 ist eine Verriegelungsanzeigeeinrichtung 160 angeordnet, die den Verriegelungszustand des Verriegelungshakens 110 signalisiert. Diese Vorrichtung 160 umfasst einen Stift 164, der durch eine Öffnung 162 in der Seitenwand 104 im entriegelten Zustand nach außen vorsteht. Im verriegelten Zustand ist der Stift 164 zurückgezogen und schließt bündig mit der Seitenwand 104 ab.

Die Deckwand 102 besitzt eine Öffnung 170, durch die sich der Verriegelungshaken 110 nach oben erstreckt. In der hier gezeigten Ausführungsform besteht der Verriegelungshaken 110 aus zwei Teilen 110'. Dementsprechend weist der Verriegelungshaken 110 ein Hakenelement 111 auf, das aus zwei Hakenelementteilen 111' besteht.

Der Verriegelungshaken 110 wird seitlich von zwei aufragenden Führungselementen 152, 154 flankiert, die das Einführen in den Eckbeschlag 22 erleichtern. Die beiden Führungselemente 152, 154 sind über eine Brücke 156 miteinander verbunden, die gerundet ausgeführt ist und ebenfalls das Einführen in den Eckbeschlag 22 des Containers 10 erleichtert. Gleichzeitig wird durch die Brücke 156 der Verriegelungshaken 110 vor Beschädigungen beim Einführen in den Eckbeschlag 22 geschützt.

Die Containerverriegelungskassette 200 besitzt eine Montageplatte 202, an der die verschiedenen Baugruppen 220, 250, 330 der Betätigungseinrichtung 210 für den Verriegelungshaken 110 befestigt sind.

An der Montageplatte 202 ist eine Frontplatte 204 befestigt. Der an der Frontplatte 204 dargestellte Griff 350 gehört zu der Manipuliereinrichtung 332 für das zweite Stellelement 260, das im Zusammenhang mit den übrigen Zeichnungen näher erläutert wird.

Die zweite alternative Ausführungsform, die vorsieht, dass die Betätigungseinrichtung 210 im Containerverriegelungsgehäuse 100 montiert ist, unterscheidet sich von der Kassettenausführung (erste alternative Ausführungsform) dadurch, dass keine Montageplatte 202 vorgesehen ist und dass die Betätigungseinrichtung 210 an den Gehäusewänden montiert ist. Die Frontplatte 204 bildet in diesem Fall eine Vorderwand des Containerverriegelungsgehäuses 100 und ist z. B. an den Gehäusewänden 104, 106 montiert.

Die Erläuterungen bezüglich der Betätigungseinrichtung 210, der Bestandteile der Betätigungseinrichtung 210 und der Funktionsweise der Betätigungseinrichtung 210 im Zusammenhang mit dem Verriegelungshaken 110 gelten in gleicher Weise für beide alternative Ausführungsformen.

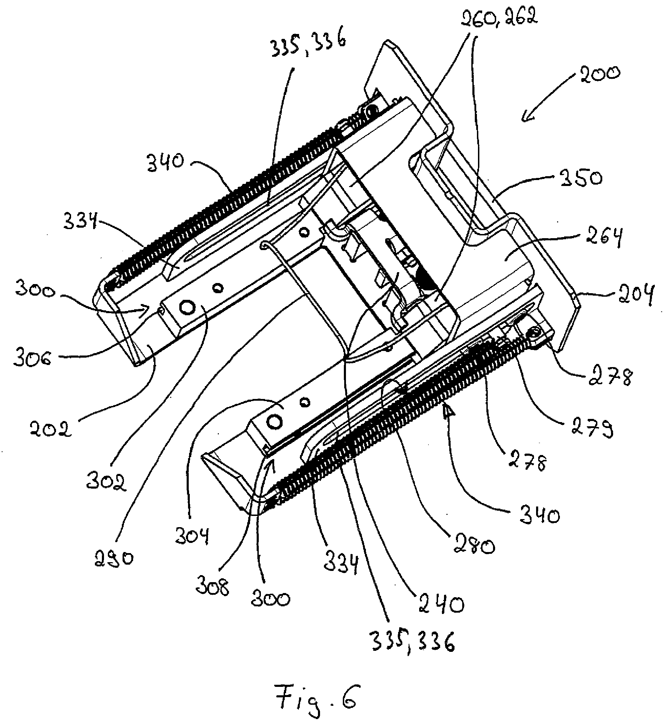

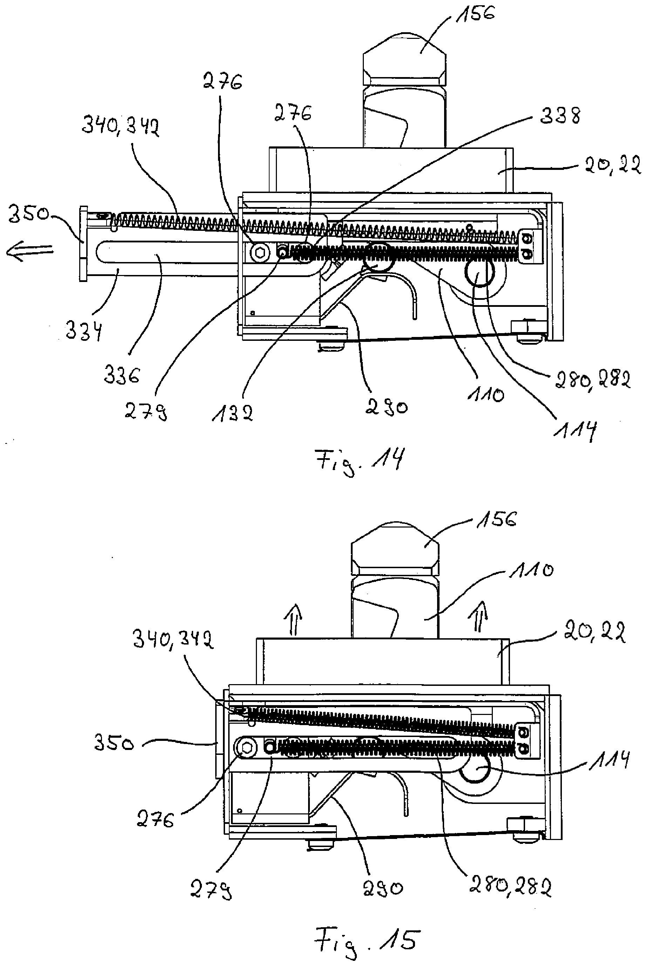

In der Figur 2 sind die meisten Bauteile der Betätigungseinrichtung 210 verdeckt. An der linken Seite der Containerverriegelungskassette 200 ist die dritte Federeinrichtung 340 in Gestalt einer Zugfeder 342 zu sehen, die Bestandteil der Manipuliereinrichtung 332 der dritten Baugruppe 330 ist. Die Zugfeder 342 ist an der Montageplatte 202 und an dem Griff 350 befestigt (siehe auch Figur 14). Weiterhin ist die zweite Federeinrichtung 280 in Gestalt der Zugfeder 282 zu sehen, die Bestandteil der zweiten Baugruppe 250 ist, zu der unter anderem das zweite Stellelement 260 gehört. Die Zugfeder 282 ist an der Montageplatte 202 und am zweiten Stellelement 260 befestigt (siehe auch Figur 14). An der rechten Seite der Containerverriegelungskassette 200 befinden sich ebenfalls die beiden Zugfedern 342 und 282 (s. Figur 6), die in Figur 2 nicht zu sehen sind.

Im Fall der zweiten alternativen Ausführungsform sind die Zugfedern 282, 342 an der Rückwand 108 des Gehäuses 100 befestigt.

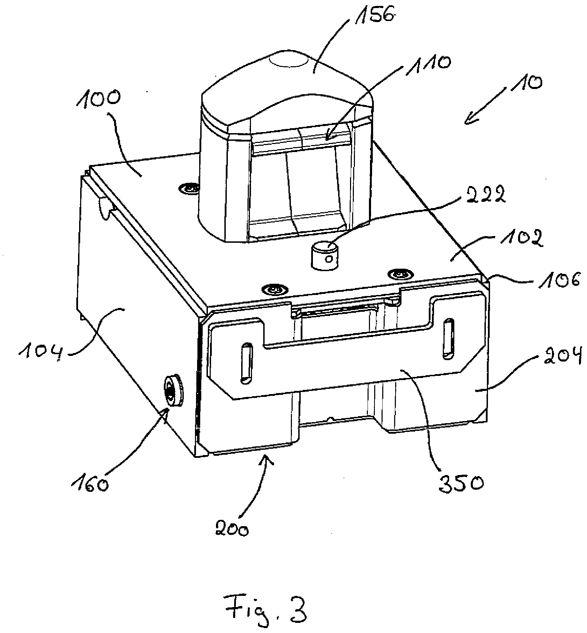

Durch die Montageplatte 202 erstreckt sich ein Auslösestift 222 der Auslöseeinrichtung 221 nach oben, der nach dem Einsetzen in das Containerverriegelungsgehäuse 100 durch die Öffnung 150 in der Deckwand 102 nach oben ragt, wie dies in der Figur 3 dargestellt ist, die die Verriegelungsvorrichtung 10 mit in das Containerverriegelungsgehäuse 100 eingesetzter Containerverriegelungskassette 200 zeigt.

Bei der zweiten alternativen Ausführungsform ist die in Figur 3 gezeigte Frontplatte 204 an den Gehäusewänden 102, 104, 106 befestigt.

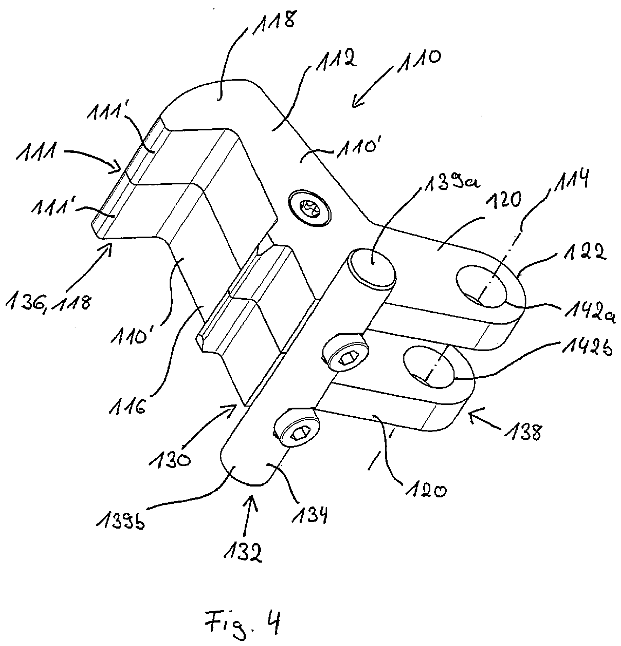

In der Figur 4 ist der Verriegelungshaken 110 perspektivisch dargestellt, der einen Hakenkörper 112 und ein Hakenelement 111 aufweist. Der Verriegelungshaken 110 ist zweiteilig mit zwei Hakenteilen 110' und zwei Hakenelementteilen 111' ausgeführt und als Hebel mit zwei Enden 136, 138 ausgestaltet. Am ersten Ende 136 ist das Hakenelement 111 und am zweiten Ende 138 des Hebels ist die Drehachse 114 angeordnet. Zwischen den beiden Enden 136, 138 ist ein Betätigungsmittel 132 angeordnet, das als stabförmiges Element 134 ausgebildet ist und in der hier gezeigten Ausführungsform am Verriegelungshaken 110 angeschraubt ist. Das stabförmige Element 134 steht seitlich gegenüber dem Hakenkörper 112 vor, wodurch zwei Zapfen 139a,b gebildet werden. Die Zapfen 139a,b können zusätzlich jeweils mit einem Lager, z. B. einem Kugellager (nicht dargestellt) bestückt sein.

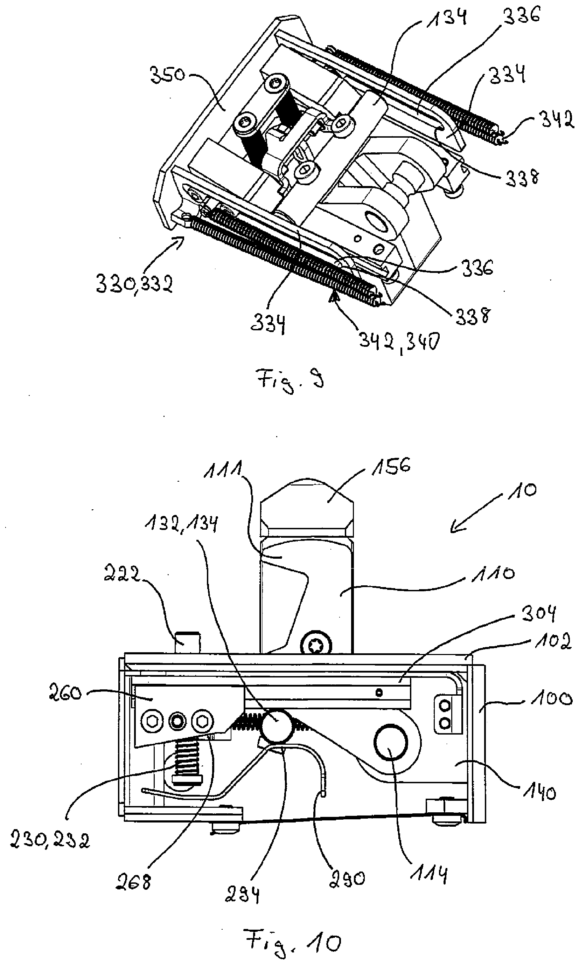

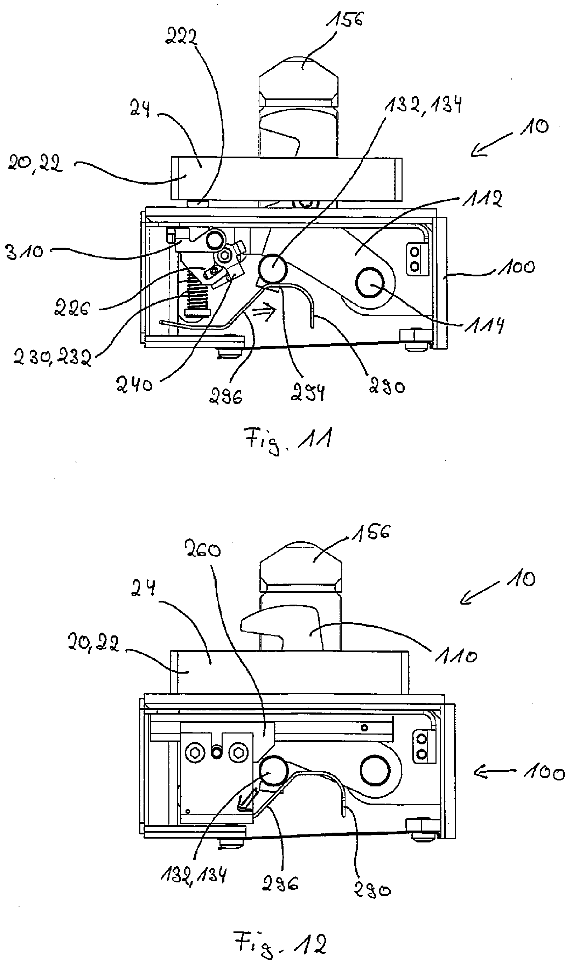

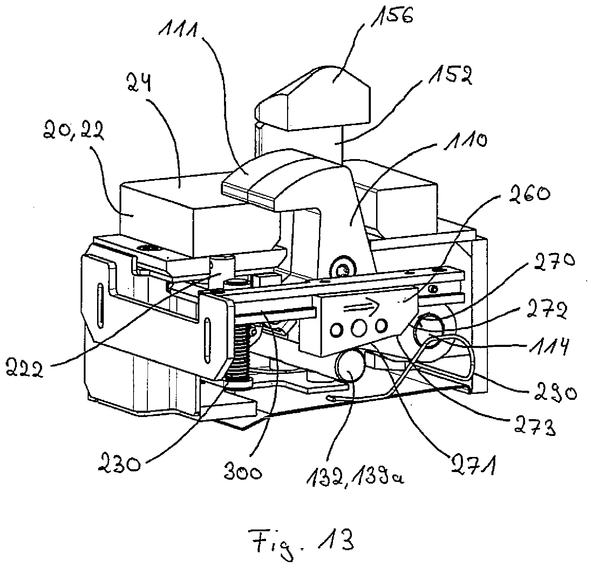

Das Betätigungsmittel 132 wirkt mit dem ersten Stellelement 290 und dem zweiten Stellelement 260 zusammen, wobei das erste Stellelement 290 an der Unterseite der Zapfen 139a,b (siehe Figur 10 und 11) und das zweite Stellelement 260 an der Oberseite der Zapfen 139a,b (siehe Figur 13) angreift.

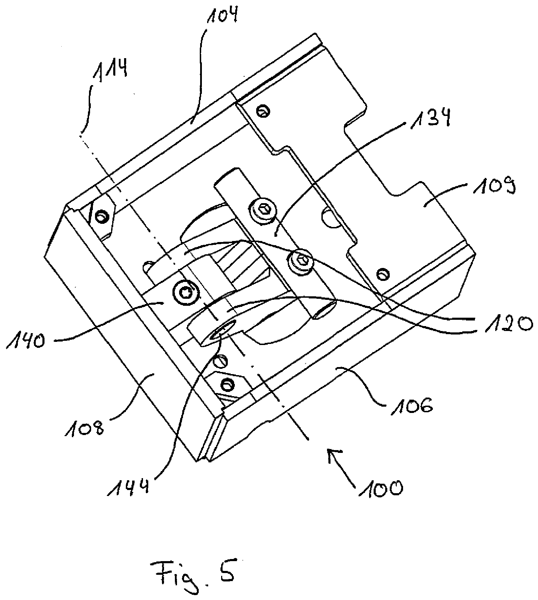

Der Hebel ist gewinkelt ausgeführt. Er besitzt einen ersten Schenkel 116 und einen zweiten Schenkel 120 mit den freien Enden 118, 122, die mit den Enden 136, 138 des Hebels identisch sind. Im Verbindungsbereich 130 der beiden Schenkel 116, 120 ist das Betätigungsmittel 132 angeordnet. Der zweite Schenkel 120 besitzt zwei Öffnungen 142a,b, durch die die Drehachse 114 verläuft und die zusammen mit der Schwenkhalterung 140 und einem Lagerbolzen 144 die Schwenklagerung des Verriegelungshakens 110 bilden (siehe Figur 5).

Der Schwerpunkt des Verriegelungshakens 110 liegt beabstandet zur Drehachse 114, so dass der Verriegelungshaken in Einbaulage der Verriegelungsvorrichtung 10 von seiner Bereitschaftsstellung gravitationsgetrieben in seine Verriegelungsstellung fällt.

In der Figur 5 ist die Unteransicht des Containerverriegelungsgehäuses 100 mit montiertem Verriegelungshaken 110 dargestellt. Die Schwenkhalterung 140 ist an der Rückwand 108 befestigt. Mittels des Lagerbolzens 144 ist der zweite Schenkel 120 des Verriegelungshakens 110 an der Schwenkhalterung 140 schwenkbar gelagert.

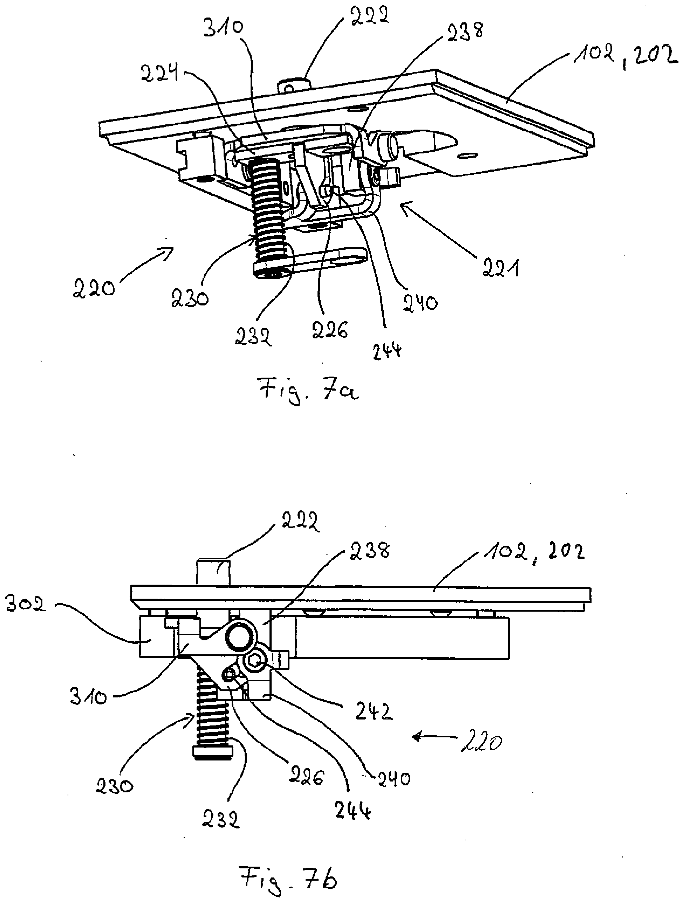

In der Figur 6 ist die Unterseite der Containerverriegelungskassette 200 mit den Komponenten der drei Baugruppen 220, 250 und 330 dargestellt. Die drei Baugruppen sind im Detail in den Figuren 7 bis 9 dargestellt.

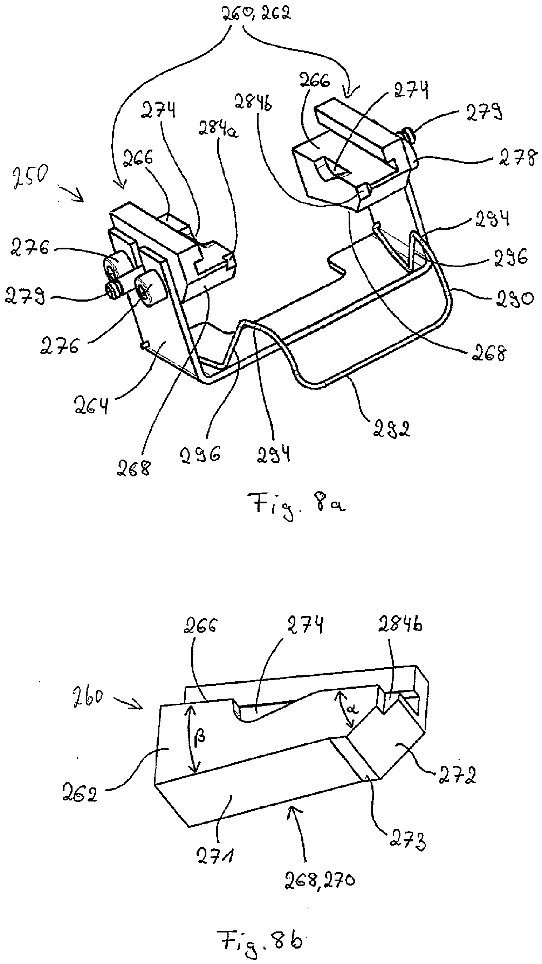

Die zweite Baugruppe 250 beinhaltet das zweite Stellelement 260 (siehe auch Figur 8a), das aus zwei als Keil ausgebildeten Riegeln 262 besteht. Beide Riegel 262 sind über ein Verbindungselement 264 miteinander verbunden und in einer Linearführungseinrichtung 300 translatorisch verfahrbar. Die Linearführungseinrichtung 300 weist zwei Führungsschienen 302, 304 mit Nuten 306, 308 auf, wobei in jeder Führungsschiene 302, 304 ein Riegel 262 geführt wird. Das zweite Stellelement 260 befindet sich in seiner Ruheposition und kann längs der Führungsschienen 302, 304 in seine Sperrposition verfahren werden.

In der in Figur 6 dargestellten Ruheposition wird das zweite Stellelement 260 mittels eines Arretierungselementes 240 in Gestalt eines Arretierungsbügels gehalten (siehe Figuren 7a,b). Das Arretierungselement 240 ist Bestandteil der ersten Baugruppe 220, die in den Figuren 7a,b dargestellt ist.

Jeder Riegel 262 ist mit einem Befestigungsstift 279 versehen, an dem die zweite Federeinrichtung 280 angreift, die vorgespannt ist und nach Freigabe des zweiten Stellelementes 260 das zweite Stellelement 260 in die Sperrposition zieht.

An dem zweiten Stellelement 260 ist das erste Stellelement 290 befestigt, das als Federelement ausgeführt ist. Das Federelement ist ein Drahtbügel und wird im Detail in der Figur 8a gezeigt.

Außerdem sind in der Figur 6 zwei Führungsplatten 334 der Manipuliereinrichtung 332 der dritten Baugruppe 330 zu sehen, die in der Figur 9 im Einzelnen dargestellt ist. Diese Führungsplatten 334 verfügen über Führungsbahnen 335 in Form von Langlöchern 336, in denen Schraubenköpfe 276, 278 des zweiten Stellelementes 260 geführt werden. Diese Führungsplatten 334 sind an dem Griff 350 befestigt und mittels der dritten Federeinrichtung 340 vorgespannt.

Die Linearführungseinrichtung 300 ist in der Darstellung der Figur 6 an der Montageplatte 202 befestigt. Gemäß der zweiten alternativen Ausführungsform entfällt die Montageplatte, so dass die Linearführungseinrichtung 300 an der Deckwand 102 befestigt wird.

In den Figuren 7a und 7b ist die erste Baugruppe 220 in zwei Ansichten vergrößert dargestellt, die an der Deckwand 102 oder alternativ an der Montageplatte 202 angeordnet ist. Die Baugruppe 220 umfasst die Auslöseeinrichtung 221, die den Auslösestift 222 aufweist. Der Auslösestift 222 weist am unteren Ende eine Kulissenführung 226 auf, in der ein Stift 244 des Arretierungselementes 240 geführt ist, so dass das Arretierungselement 240 beim Auslösen der Auslöseeinrichtung 221 in einer Schwenklagerung 242 geschwenkt werden kann und das zweite Stellelement 260 zur Freigabe betätigt. Das Arretierungselement 240 ist deshalb schwenkbar an einem Befestigungselement 238 der Auslöseeinrichtung 221 angeordnet.

Die Auslöseeinrichtung 221 verfügt über eine erste Federeinrichtung 230 mit zwei Druckfedern 232, wovon nur eine Druckfeder 232 dargestellt ist. Die Druckfedern 232 halten den Auslösestift 222 in seiner ausgefahrenen Auslöseposition.

In der Figur 7b ist eine weitere Ansicht der ersten Baugruppe 220 dargestellt. Bei betätigtem Auslösestift 222 kann eine Sperrklinke 310 gravitationsgetrieben in die Ausnehmungen 274 (siehe Figur 8b) des zweiten Stellelementes 260 fallen und dieses somit trotz der Betätigung des Auslösestiftes 222 in Ruheposition - zweite Ruheposition - halten. Bei Entlastung des Auslösestiftes 222 wird die Sperrklinke 310 durch die Platte 224 (siehe Figur 7a) wieder in die Ausgangsposition gedrückt. Das zweite Stellelement 260 wird somit von der Sperrklinke 310 freigegeben und gleitet nun bis an den jetzt wieder herausgeschwenkten Arretierungsbügel 240. Das zweite Stellelement 260 bleibt bei Entlastung des Auslösestiftes 222 somit in Ruhelage (erste Ruheposition).

In der Figur 8a ist die zweite Baugruppe 250 vergrößert dargestellt.

Die beiden Riegel 262 des zweiten Stellelementes 260 sind als Keil ausgeführt und verfügen über eine erste Keilfläche 266 und eine zweite Keilfläche 268. In der ersten Keilfläche 266 ist eine Ausnehmung 274 vorgesehen, in die die Sperrklinke 310 eingreift, die in der Figur 7b zu sehen ist und die im Zusammenhang mit der Manipuliereinrichtung 332 näher beschrieben wird. Am vorderen Ende der Riegel 262 sind Anschlagsflächen 284a,b für das Arretierungselement 240 angeordnet.

Die zweite Keilfläche 268 weist mehrere Abschnitte auf, die zusammen mit der Figur 8b beschrieben werden. Am Verbindungselement 264 der beiden Riegel 262 ist das erste Stellelement 290 befestigt, das zwei Halteabschnitte 294 aufweist, die über einen Verbindungsabschnitt 292 miteinander verbunden sind. Die Halteabschnitte 294 liegen am Betätigungsmittel 132 des Verriegelungshakens 110 an, wenn dieser sich in Bereitschaftsstellung befindet (siehe Figur 10). An den Halteabschnitt 294 schließen sich zwei Freigabeabschnitte 296 an, die es dem Verriegelungshaken 110 beim Verschieben des ersten Stellelementes 290 in Pfeilrichtung ermöglichen, in seine Sperrstellung zu fallen (siehe Figur 13).

Zu diesem Zweck sind die beiden Freigabeabschnitte 296 nach unten gebogen, wodurch der erforderliche Freiraum für das Betätigungselement 132 beim Verschwenken des Verriegelungshakens 110 geschaffen wird.

In der Figur 8b ist ein Riegel 262 perspektivisch dargestellt, so dass die zweite Keilfläche 268 deutlich erkennbar ist, die eine Kurvenfläche mit drei geraden ebenen Abschnitten aufweist.

Die Abschnitte 271 und 272 verlaufen schräg und schließen mit der ersten Keilfläche 266 einen Winkel α bzw. β < 90° ein. Winkel β ist so ausgelegt, dass Selbsthemmung erfolgt. Zwischen diesen beiden Abschnitten 271 und 272 verläuft ein Abschnitt 273 parallel zur Keilfläche 266. Dieser Abschnitt dient zum formschlüssigen Sperren des Verriegelungshakens 110. Abschnitt 271 bewirkt ein kraftschlüssiges Sperren und Spannen des Verriegelungshakens 110; Abschnitt 272 unterstützt den Verriegelungshaken in seiner gravitationsgetriebenen Bewegung und ist parallel zu den Freigabeabschnitten 296 ausgeführt. So kann das Betätigungsmittel 132 des Verriegelungshakens 110 zwischen dem ersten Stellelement 290 und dem zweiten Stellelement 260 ungehindert hindurch gleiten.

In der Figur 9 ist die dritte Baugruppe 330 dargestellt. Diese umfasst die Manipuliereinrichtung 332 sowie die dritte Federeinrichtung 340. Die Manipuliereinrichtung selbst setzt sich aus den Führungsplatten 334 und dem Griff 350 zusammen. In den Führungsplatten befinden sich Kulissen oder Führungsbahnen in Form von Langlöchern 336, die die Schraubenköpfe 276 und 278 der am zweiten Stellelement 260 angeordneten Schrauben aufnehmen. Durch die Zugfedern 342 wird die Manipuliereinrichtung in Ruhelage ins Containerverriegelungsgehäuse 100 gezogen. Bei Betätigung in Form des Herausziehens am Griff kommt das Widerlager 338 zur Anlage an zwei der Schraubenköpfe 276, 278 (siehe auch Figur 14). Hierdurch wird das zweite Stellelement 260 ebenfalls verstellt. Durch die Kulissen kann sich das zweite Stellelement 260 frei von der Manipuliereinrichtung 332, wenn sich diese in Ruhelage befindet, bewegen. Die Funktionsweise der Verriegelungsvorrichtung 10 wird nachfolgend anhand der Figuren 10 bis 17 erläutert:
Die Figur 10 zeigt in Seitenansicht bei geöffnetem Containerverriegelungsgehäuse 100 den Verriegelungshaken 110 in seiner Bereitschaftsstellung, in der der Verriegelungshaken 110 mittels des ersten Stellelementes 290 gehalten wird. Der Verriegelungshaken 110 befindet sich geschützt unter der Brücke 156. Das als Drahtbügel ausgebildete erste Stellelement 290 drückt von unten mit seinen Halteabschnitten 294 gegen das Betätigungsmittel 132 des Verriegelungshakens 110. Das zweite Stellelement 260 befindet sich vorgespannt in seiner Ruheposition und wird durch das Arretierungselement 240 gehalten, das an den Anschlagsflächen 284a,b (siehe Figur 8a) anliegt. Der Auslösestift 222 befindet sich vorgespannt in seiner Auslöseposition.

Die Figur 11 zeigt das Aufsetzen des Containers 20 mit seinem Eckbeschlag 22, wodurch der Auslösestift 222 gegen die Kraft der Druckfeder 232 nach unten gedrückt wird. Das Arretierungselement 240 wird nach oben geschwenkt, so dass das zweite Stellelement 260 freigegeben wird. Durch die Kraft der Zugfeder 282 wird das zweite Stellelement 260 in Pfeilrichtung bewegt, wodurch das Betätigungsmittel 132 sich von dem Halteabschnitt 294 des ersten Stellelements 290 löst und der Verriegelungshaken 110 gravitationsgetrieben in den Bereich des Freigabeabschnitts 296 gelangt, der eine nach unten gerichtete Bewegung (siehe Pfeil) ermöglicht, wie dies in Figur 12 dargestellt ist.

Hierbei kontaktieren die Abschnitte 272 der beiden Riegel 262 das Betätigungsmittel 132 und unterstützen die Abwärtsbewegung des Verriegelungshakens 110, wodurch das Hakenelement 111 unter der Brücke 156 nach links heraustritt.

Die Riegel 262 bewegen sich weiter nach rechts (siehe Pfeil) bis die in Figur 13 gezeigte Stellung erreicht ist. Mittels des Abschnitts 271 des Riegels 262 wird das Betätigungsmittel 132 nach unten verspannt, wodurch das Hakenelement 111 auf die Verriegelungsfläche 24 des Bodens des Eckbeschlags 22 drückt und den Eckbeschlag 22 verspannt.

Der Stift 164 der Verriegelungsanzeigeeinrichtung 160, der zuvor von dem Verbindungselement 264 gegen die Kraft einer Feder an der Außenseite des Containerverriegelungsgehäuses 100 etwas herausgedrückt wurde, kann nun getrieben von der Feder nach innen gleiten, wodurch die Verriegelung angezeigt wird (siehe Figur 2).

Zum Entriegeln wird die Manipuliereinrichtung 332 der dritten Baugruppe (siehe Figur 9) manuell betätigt, indem der Griff 350 mit den Führungsplatten 334 in Pfeilrichtung herausgezogen wird. Hierbei laufen die Schraubenköpfe 276, 278 in den Langlöchern 336 der Führungsplatten 334 nach rechts, bis der rechte Schraubenkopf 276 am Ende des Langlochs 336 angekommen ist, das somit ein Widerlager 338 darstellt. Beim weiteren Herausziehen der Führungsplatte 334 wird das zweite Stellelement 260, d. h. die Riegel 262, mitgenommen. Der Verriegelungshaken 110 wird freigegeben und gleichzeitig durch das erste Stellelement 290 in seine Bereitschaftsstellung angehoben, wie dies in den Figuren 14 bis 16 zu sehen ist.

Dieser geöffnete Zustand wird durch die Verriegelungsanzeigeeinrichtung 160 dadurch angezeigt, dass der Stift 164 durch das Verbindungselement 264 wieder in Richtung Außenseite des Containerverriegelungsgehäuses 100 gedrückt wird.

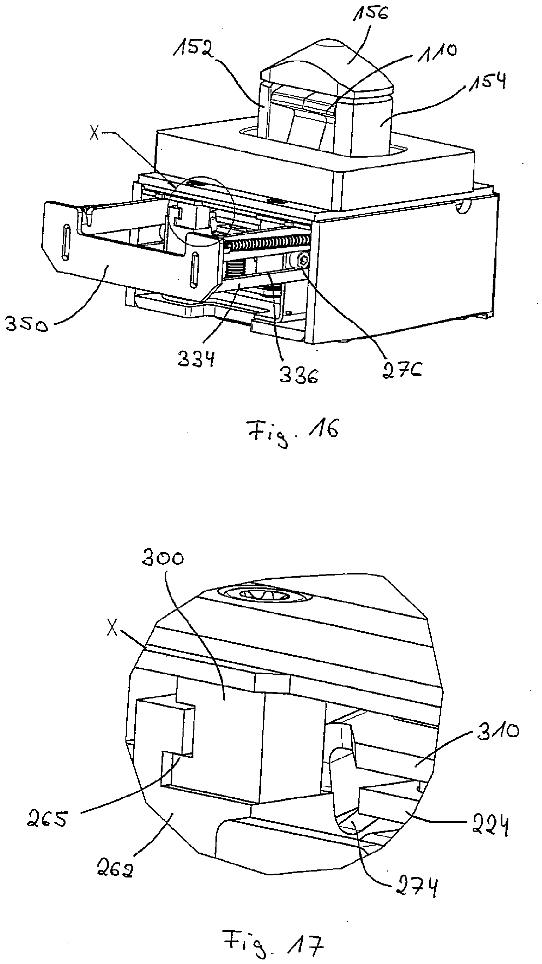

Beim Loslassen des Handgriffs 350 gleitet die Manipuliereinrichtung 322 wieder zurück ins Gehäuseinnere (siehe Figur 15). Das zweite Stellelement 260 wird in dieser Position von der Sperrklinke 310 gehalten, die in die Ausnehmung 274 des ersten Stellelementes 290 gefallen sind (siehe Figur 17).

Der Container 20 kann danach nach oben angehoben und entfernt werden.

Die Figur 16 zeigt die entriegelte Situation, in der durch Herausziehen der Manipuliereinrichtung 332 der Verriegelungshaken 110 in seine Bereitschaftsstellung gebracht worden ist. Wenn dies jedoch unbeabsichtigt erfolgt ist, d. h. keine anschließende Entladung und somit keine Entfernung des Containers 20 vorgesehen ist, muss die Verriegelung wieder hergestellt werden. Zu diesem Zweck ist die Sperrklinke 310 bei herausgezogener Manipuliereinrichtung 332 von außen zugänglich, wie in der Detailzeichnung X in Figur 17 gezeigt wird. Durch manuelles Anheben der Sperrklinke 310 gibt diese das zweite Stellelement 260 wieder frei. Das zweite Stellelement 260 gleitet wie beim bereits beschriebenen Aufsetzvorgang des Containers erneut über das Betätigungsmittel 132 und stellt die Verriegelung her.

Wird bei geöffneter Verriegelung der Container 20 abgehoben, so wird der Auslösestift 222 freigegeben. In der Folge schwenkt der Arretierungsbügel 240 wieder nach unten. Außerdem wird die Sperrklinke 310 nun durch die Platte 224 zurück in ihre Ausgangsposition gedrückt, wodurch das zweite Stellelement 260 bis an den Arretierungsbügel gleiten kann. Die Bereitschaft für das erneute Laden eines Containers ist hergestellt.

### Bezugszeichenliste

- 10: Container-Verriegelungsvorrichtung
- 12: Paar von Container-Verriegelungsvorrichtungen

- 20: Container
- 22: Eckbeschlag
- 24: Verriegelungsfläche

- 30: Sattelauflieger
- 32: Ladefläche

- 100: Containerverriegelungsgehäuse
- 102: Deckwand
- 104: Seitenwand
- 106: Seitenwand
- 108: Rückwand
- 109: Bodenwand

- 110: Verriegelungshaken
- 110': Hakenteil
- 111: Hakenelement
- 111': Hakenelementteil
- 112: Hakenkörper
- 114: Drehachse
- 116: erster Schenkel
- 118: freies Ende

- 120: zweiter Schenkel
- 122: freies Ende
- 130: Verbindungsbereich
- 132: Betätigungsmittel
- 134: stabförmiges Element
- 136: erstes Ende des Hebels
- 138: zweites Ende des Hebels
- 139a,b: Zapfen

- 140: Schwenkhalterung
- 142a,b: Öffnung
- 144: Lagerbolzen

- 150: Öffnung für Auslösestift
- 152: Führungselement
- 154: Führungselement
- 156: Brücke

- 160: Verriegelungsanzeigeeinrichtung
- 162: Öffnung für Anzeigeeinrichtung
- 164: Stift

- 170: Öffnung

- 200: Containerverriegelungskassette
- 202: Montageplatte
- 204: Frontplatte

- 210: Betätigungseinrichtung

- 220: erste Baugruppe
- 221: Auslöseeinrichtung
- 222: Auslösestift
- 224: Platte
- 226: Kulissenführung

- 230: erste Federeinrichtung
- 232: Druckfeder
- 238: Befestigungselement

- 240: Arretierungselement
- 242: Schwenklagerung
- 244: Führungsstift des Arretierungselements

- 250: zweite Baugruppe

- 260: zweites Stellelement
- 262: Riegel
- 264: Verbindungselement
- 265: Führungsnut
- 266: erste Keilfläche
- 268: zweite Keilfläche

- 270: Kurvenfläche
- 271: erster Abschnitt der Kurvenfläche
- 272: zweiter Abschnitt der Kurvenfläche
- 273: dritter Abschnitt der Kurvenfläche
- 274: Ausnehmung
- 276: Schraubenkopf
- 278: Schraubenkopf
- 279: Befestigungsstift für Feder
- 280: zweite Federeinrichtung
- 282: Zugfeder
- 284a,b: Anschlagsfläche für Arretierungselement

- 290: erstes Stellelement
- 292: Verbindungsabschnitt
- 294: Halteabschnitt
- 296: Freigabeabschnitt

- 300: Linearführungseinrichtung
- 302: Führungsschiene
- 304: Führungsschiene
- 306: Nut
- 308: Nut

- 310: Sperrklinke

- 330: dritte Baugruppe
- 332: Manipuliereinrichtung
- 334: Führungsplatte
- 335: Führungsbahn, Kulisse
- 336: Langloch
- 338: Widerlager

- 340: dritte Federeinrichtung
- 342: Zugfeder

- 350: Griff

## Patentansprüche

1. Verriegelungsvorrichtung (10) für Container (20) mit einem Containerverriegelungsgehäuse (100) und mit einem Verriegelungshaken (110), der einen Hakenkörper (112), ein Hakenelement (111) und eine Drehachse (114) aufweist, die relativ zum Gehäuse (100) ortsfest ist und um die der Verriegelungshaken (110) in eine Bereitschaftsstellung und in eine Verriegelungsstellung schwenkbar ist, und mit einer Betätigungseinrichtung (210) für den Verriegelungshaken (110),
**dadurch gekennzeichnet,**
**dass** die Betätigungseinrichtung (210) ein erstes Stellelement (290) und ein zweites Stellelement (260) sowie eine Auslöseeinrichtung (221) aufweist,
**dass** das erste Stellelement (290) den Verriegelungshaken (110) in seiner Bereitschaftsstellung hält und dass das zweite Stellelement (260) derart ausgebildet ist, dass es den Verriegelungshaken (110) in seiner Verriegelungsstellung sperrt und spannt, und
**dass** die Auslöseeinrichtung (221) nach dem Auslösen auf das erste Stellelement (290) und/oder auf das zweite Stellelement (260) einwirkt, wodurch automatisch das Spannen und Sperren des Verriegelungshakens (110) in seiner Verriegelungsstellung mittels des zweiten Stellelementes (260) bewirkt wird.

2. Verriegelungsvorrichtung nach Anspruch 1,
**dadurch gekennzeichnet,**
**dass** der Verriegelungshaken (110) ein Hebel ist, dessen Drehachse (114) an einem zweiten Ende (138) des Hebels angeordnet ist, wobei das Hakenelement (111) an einem ersten Ende (136) des Hebels angeordnet ist.

3. Verriegelungsvorrichtung nach Anspruch 1 oder 2,
**dadurch gekennzeichnet,**
**dass** der Verriegelungshaken (110) zwischen dem ersten und dem zweiten Ende (136, 138) ein Betätigungsmittel (132) aufweist.

4. Verriegelungsvorrichtung nach einem der Ansprüche 1 bis 3,
**dadurch gekennzeichnet,**
**dass** der Verriegelungshaken (110) in Einbaulage des Containerverriegelungsgehäuses (100) gravitationsgetrieben in die Verriegelungsstellung fällt.

5. Verriegelungsvorrichtung nach einem der Ansprüche 1 bis 4,
**dadurch gekennzeichnet,**
**dass** der Verriegelungshaken (110) in seiner Bereitschaftsstellung mittels einer Federeinrichtung vorgespannt ist.

6. Verriegelungsvorrichtung nach einem der Ansprüche 1 bis 5,
**dadurch gekennzeichnet,**
**dass** das zweite Stellelement (260) eine Kurvenfläche (270) aufweist, die am Verriegelungshaken (110) angreift und den Verriegelungshaken (110) sperrt und spannt.

7. Verriegelungsvorrichtung nach Anspruch 6,
**dadurch gekennzeichnet,**
**dass** die Kurvenfläche (270) mindestens einen Abschnitt (271) zum kraftschlüssigen Spannen und Sperren des Verriegelungshakens (110) aufweist.

8. Verriegelungsvorrichtung nach Anspruch 6 oder 7,
**dadurch gekennzeichnet,**
**dass** die Kurvenfläche (270) mindestens einen Abschnitt (273) zum formschlüssigen Sperren des Verriegelungshakens (110) aufweist.

9. Verriegelungsvorrichtung nach einem der Ansprüche 1 bis 8,
**dadurch gekennzeichnet,**
**dass** im Containerverriegelungsgehäuse (100) eine Führungseinrichtung (300) vorgesehen ist, in der das zweite Stellelement (260) verschiebbar gelagert ist.

10. Verriegelungsvorrichtung nach einem der Ansprüche 1 bis 9,
**dadurch gekennzeichnet,**
**dass** das zweite Stellelement (260) in der Ruheposition mittels einer zweiten Federeinrichtung (280) vorgespannt ist.

11. Verriegelungsvorrichtung nach einem der Ansprüche 1 bis 10,
**dadurch gekennzeichnet,**
**dass** das zweite Stellelement (260) in einer ersten Ruheposition mittels eines Arretierungselementes (240) arretierbar ist.

12. Verriegelungsvorrichtung nach einem der Ansprüche 1 bis 11,
**dadurch gekennzeichnet,**
**dass** das Arretierungselement (240) von der Auslöseeinrichtung (221) zur Freigabe des zweiten Stellelementes (260) betätigbar ist.

13. Verriegelungsvorrichtung nach einem der Ansprüche 1 bis 12,
**dadurch gekennzeichnet,**
**dass** das zweite Stellelement (260) in einer zweiten Ruheposition mittels einer Sperrklinke (310) gehalten wird.

14. Verriegelungsvorrichtung nach Anspruch 13,
**dadurch gekennzeichnet,**
**dass** die Sperrklinke (310) von außen zugänglich ist und manuell in ihre Freigabeposition bewegbar ist.

15. Verriegelungsvorrichtung nach einem der Ansprüche 1 bis 14,
**dadurch gekennzeichnet,**
**dass** eine Manipuliereinrichtung (332) mit einer dritten Federeinrichtung (340) für das zweite Stellelement (260) vorgesehen ist.

16. Verriegelungsvorrichtung nach einem der Ansprüche 1 bis 15,
**dadurch gekennzeichnet,**
**dass** die Auslöseeinrichtung (221) einen Auslösestift (222) aufweist.

17. Verriegelungsvorrichtung nach Anspruch 16,
**dadurch gekennzeichnet,**
**dass** der Auslösestift (222) mittels der ersten Federeinrichtung (230) in seiner Auslöseposition vorgespannt ist.

18. Verriegelungsvorrichtung nach einem der Ansprüche 1 bis 17,
**dadurch gekennzeichnet,**
**dass** an einer Gehäusewand (102 bis 108) eine Verriegelungsanzeigeeinrichtung (160) vorgesehen ist.

19. Verriegelungsvorrichtung nach einem der Ansprüche 1 bis 18,
**dadurch gekennzeichnet,**
**dass** auf der Deckwand (102) zwei den Verriegelungshaken (110) flankierende aufragende Führungselemente (152, 154) angeordnet sind.

20. Verriegelungsvorrichtung nach Anspruch 19,
**dadurch gekennzeichnet,**
**dass** die Führungselemente (152, 154) an ihrem freien Ende mittels einer Brücke miteinander verbunden sind.

21. Verriegelungsvorrichtung nach einem der Ansprüche 1 bis 20,
**dadurch gekennzeichnet,**
**dass** die Betätigungseinrichtung (210) in einer Containerverriegelungskassette (200) angeordnet ist, die in das Containerverriegelungsgehäuse (100) einsetzbar ist.

22. Containerverriegelungsgehäuse (100) zur Aufnahme einer Containerverriegelungskassette (200) mit mindestens einer Deckwand (102), zwei Seitenwänden (104, 106) und einer Rückwand (108) und mit einem sich durch die Deckwand (102) erstreckenden Verriegelungshaken (110), der einen Hakenköper (112), ein Hakenelement (111) und eine Drehachse (114) aufweist, die relativ zum Containerverriegelungsgehäuse (100) ortsfest ist und um die der Verriegelungshaken (11) in eine Bereitschaftsstellung und in eine Verriegelungsstellung schwenkbar ist,
**dadurch gekennzeichnet,**
**dass** die Drehachse (114) des Verriegelungshakens (110) parallel zur Deckwand (102) angeordnet ist, und
**dass** an einer Gehäusewand (102, 104, 106, 108) eine Schwenkhalterung (140) für die schwenkbare Lagerung des Verriegelungshakens (110) vorgesehen ist.

23. Containerverriegelungskassette (200) zum Einsetzen in ein Containerverriegelungsgehäuse (100),
**dadurch gekennzeichnet,**
**dass** sie eine Montageplatte (202) aufweist, an der drei Baugruppen (220, 250, 330) angeordnet sind, die eine Betätigungseinrichtung (210) für einen Verriegelungshaken (110) bilden,
wobei eine erste Baugruppe (220) eine Auslöseeinrichtung (221) mit einer ersten Federeinrichtung (230) aufweist,
wobei eine zweite Baugruppe (250) ein erstes Stellelement (290) und ein parallel zur Montageplatte (202) verschiebbares zweites Stellelement (260) mit einer zweiten Federeinrichtung (280) aufweist, und
wobei eine dritte Baugruppe (330) eine Manipuliereinrichtung (332) für das erste und/oder zweite Stellelement (260) mit einer dritten Federeinrichtung (340) aufweist.

24. Anordnung von Verriegelungsvorrichtungen (10) gemäß Anspruch 1 an einer Containerladefläche (32), wobei die Verriegelungsvorrichtungen (10) am Rand der Ladefläche (32) jeweils paarweise gegenüberliegend angeordnet sind,
**dadurch gekennzeichnet,**
**dass** die Hakenelemente (111) jedes Vorrichtungspaars (12) in entgegengesetzte Richtungen weisen.

## Claims

1. Locking device (10) for containers (20) having a container locking housing (100) and having a locking hook (110) which has a hook member (112), a hook element (111) and a rotation axis (114), which is fixed in position relative to the housing (100) and about which the locking hook (110) can be pivoted into a readiness position and into a locking position, and having an actuation device (210) for the locking hook (110),
**characterised in that**
the actuation device (210) has a first adjustment element (290) and a second adjustment element and an actuation device (221), **in that** the first adjustment element (290) retains the locking hook (110) in the readiness position thereof and **in that** the second adjustment element (260) is constructed in such a manner that it blocks and clamps the locking hook (110) in the locking position thereof, and
**in that** the actuation device (221) after actuation acts on the first adjustment element (290) and/or on the second adjustment element(260), whereby the clamping and blocking of the locking hook (110) in the locking position thereof is brought about by means of the second adjustment element (260).

2. Locking device according to claim 1,
**characterised in that**
the locking hook (110) is a lever whose rotation axis (114) is arranged on a second end (138) of the lever, wherein the hook element (111) is arranged on a first end (136) of the lever.

3. Locking device according to claim 1 or 2,
**characterised in that**
the locking hook (110) has an actuation means (132) between the first end and the second end (136, 138).

4. Locking device according to any one of claims 1 to 3,
**characterised in that**
the locking hook (110) falls into the locking position in an installation position of the container locking housing (100) in a manner driven by gravitational force.

5. Locking device according to any one of claims 1 to 4,
**characterised in that**
the locking hook (110) is pretensioned in the readiness position by means of a resilient device.

6. Locking device according to any one of claims 1 to 5,
**characterised in that**
the second adjustment element (260) has a curved face (270) which engages on the locking hook (110) and which blocks and clamps the locking hook (110).

7. Locking device according to claim 6,
**characterised in that**
the curved face (270) has at least one portion (271) for clamping and blocking the locking hook (110) in a non-positive-locking manner.

8. Locking device according to claim 6 or 7,
**characterised in that**
the curved face (270) has at least one portion (273) for blocking the locking hook (110) in a positive-locking manner.

9. Locking device according to any one of claims 1 to 8,
**characterised in that**
there is provided in the container locking housing (100) a guide device (300) in which the second adjustment element (260) is displaceably supported.

10. Locking device according to any one of claims 1 to 9,
**characterised in that**
the second adjustment element (260) is pretensioned in the rest position by means of a second resilient device (280).

11. Locking device according to any one of claims 1 to 10,
**characterised in that**
the second adjustment element (260) can be secured in a first rest position by means of a securing element (240).

12. Locking device according to any one of claims 1 to 11,
**characterised in that**
the securing element (240) can be actuated by the actuation device (221) in order to release the second adjustment element (260) .

13. Locking device according to any one of claims 1 to 12,
**characterised in that**
the second adjustment element (260) is retained in a second rest position by means of a locking detent (310).

14. Locking device according to claim 13,
**characterised in that**
the locking detent (310) is accessible from the outer side and can be moved manually into the release position thereof.

15. Locking device according to any one of claims 1 to 14,
**characterised in that**
a manipulation device (332) having a third resilient device (340) is provided for the second adjustment element (260).

16. Locking device according to any one of claims 1 to 15,
**characterised in that**
the actuation device (221) has an actuation pin (222).

17. Locking device according to claim 16,
**characterised in that**
the actuation pin (222) is pretensioned by means of the first resilient device (230) in the actuation position thereof.

18. Locking device according to any one of claims 1 to 17,
**characterised in that**
a locking display device (160) is provided on a housing wall (102 to 108).

19. Locking device according to any one of claims 1 to 18,
**characterised in that**
two rising guide elements (152, 154) which flank the locking hook (110) are arranged on the covering wall (102).

20. Locking device according to claim 19,
**characterised in that**
the guide elements (152, 154) are connected to each other at the free end thereof by means of a bridge.

21. Locking device according to any one of claims 1 to 20,
**characterised in that**
the actuation device (210) is arranged in a container locking cartridge (200) which can be inserted into the container locking housing (100).

22. Container locking housing (100) for receiving a container locking cartridge (200) having at least one covering wall (102), two side walls (104, 106) and a rear wall (108) and having a locking hook (110) which extends through the covering wall (102) and which has a hook member (112), a hook element (111) and a rotation axis (114) which is fixed in position relative to the container locking housing (100) and about which the locking hook (11) can be pivoted into a readiness position and into a locking position,
**characterised in that**
the rotation axis (114) of the locking hook (110) is arranged parallel with the covering wall (102), and **in that** a pivot retention member (140) for pivotably supporting the locking hook (110) is provided on a housing wall (102, 104, 106, 108).

23. Container locking cartridge (200) for inserting into a container locking housing (100),
**characterised in that**
it has an assembly plate (202) on which there are arranged three subassemblies (220, 250, 330) which form an actuation device (210) for a locking hook (110),
wherein a first subassembly (220) has an actuation device (221) with a first resilient device (230),
wherein a second subassembly (250) has a first adjustment element (290) and a second adjustment element (260) which can be displaced parallel with the assembly plate (202) and which has a second resilient device (280), and
wherein a third subassembly (330) has a manipulation device (332) for the first and/or the second adjustment element (260) with a third resilient device (340).

24. Arrangement of locking devices (10) according to claim 1 on a container loading face (32), wherein the locking devices (10) are arranged on the edge of the loading face (32) opposite each other in pairs,
**characterised in that**
the hook elements (111) of each device pair (12) face in opposing directions.

## Revendications

1. Dispositif de verrouillage (10) destiné à des conteneurs (20), comprenant un boîtier (100) de verrouillage de conteneurs ; un crochet de verrouillage (110) doté d'un corps (112), d'un élément d'accrochage (111) et d'un axe de rotation (114) qui occupe une position fixe par rapport audit boîtier (100), et autour duquel ledit crochet de verrouillage (110) peut pivoter vers une position d'attente et vers une position de verrouillage ; et un système d'actionnement (210) dédié audit crochet de verrouillage (110),
**caractérisé par le fait**
**que** le système d'actionnement (210) comporte un premier élément de manoeuvre (290) et un second élément de manoeuvre (260), ainsi qu'un système de déclenchement (221) ;
**que** ledit premier élément de manoeuvre (290) maintient le crochet de verrouillage (110) dans sa position d'attente, et que ledit second élément de manoeuvre (260) est réalisé de façon telle qu'il provoque un blocage et un serrage dudit crochet de verrouillage (110) dans sa position de verrouillage ; et
**que** ledit système de déclenchement (221) agit sur ledit premier élément de manoeuvre (290) et/ou sur ledit second élément de manoeuvre (260), à l'issue du déclenchement, provoquant ainsi automatiquement, au moyen dudit second élément de manoeuvre (260), le blocage et le serrage dudit crochet de verrouillage (110) dans sa position de verrouillage.

2. Dispositif de verrouillage selon la revendication 1,
**caractérisé par le fait**
**que** le crochet de verrouillage (110) est un levier, l'axe de rotation (114) dudit levier étant situé à une seconde extrémité (138) de ce dernier, l'élément d'accrochage (111) étant implanté à une première extrémité (136) dudit levier.

3. Dispositif de verrouillage selon la revendication 1 ou 2,
**caractérisé par le fait**
**que** le crochet de verrouillage (110) est muni d'un moyen d'actionnement (132) entre les première et seconde extrémités (136, 138).

4. Dispositif de verrouillage selon l'une des revendications 1 à 3,
**caractérisé par le fait**
**que** le crochet de verrouillage (110) chute à la position de verrouillage, en étant entraîné par gravité, lorsque le boîtier (100) de verrouillage de conteneurs est en position intégrée.

5. Dispositif de verrouillage selon l'une des revendications 1 à 4,
**caractérisé par le fait**
**que** le crochet de verrouillage (110) est précontraint, dans sa position d'attente, au moyen d'un système à ressorts.

6. Dispositif de verrouillage selon l'une des revendications 1 à 5,
**caractérisé par le fait**
**que** le second élément de manoeuvre (260) est pourvu d'une surface de came (270) qui vient en prise avec le crochet de verrouillage (110), et provoque le blocage et le serrage dudit crochet de verrouillage (110).

7. Dispositif de verrouillage selon la revendication 6,
**caractérisé par le fait**
**que** la surface de came (270) présente au moins une région (271) réalisée pour provoquer le blocage et le serrage du crochet de verrouillage (110), par engagement positif.

8. Dispositif de verrouillage selon la revendication 6 ou 7,
**caractérisé par le fait**
**que** la surface de came (270) présente au moins une région (273) réalisée pour provoquer le blocage du crochet de verrouillage (110), par complémentarité de formes.

9. Dispositif de verrouillage selon l'une des revendications 1 à 8,
**caractérisé par le fait**
**qu'**un système de guidage (300), dans lequel le second élément de manoeuvre (260) est monté avec faculté de coulissement, est prévu dans le boîtier (100) de verrouillage de conteneurs.

10. Dispositif de verrouillage selon l'une des revendications 1 à 9,
**caractérisé par le fait**
**que** le second élément de manoeuvre (260) est précontraint à l'emplacement de repos au moyen d'un deuxième système (280) à ressorts.

11. Dispositif de verrouillage selon l'une des revendications 1 à 10,
**caractérisé par le fait**
**que** le second élément de manoeuvre (260) peut être arrêté en un premier emplacement de repos au moyen d'un élément d'arrêt (240).

12. Dispositif de verrouillage selon l'une des revendications 1 à 11,
**caractérisé par le fait**
**que** l'élément d'arrêt (240) peut être actionné par le système de déclenchement (221), en vue de libérer le second élément de manoeuvre (260).

13. Dispositif de verrouillage selon l'une des revendications 1 à 12,
**caractérisé par le fait**
**que** le second élément de manoeuvre (260) est retenu en un second emplacement de repos au moyen d'un cliquet de blocage (310).

14. Dispositif de verrouillage selon la revendication 13,
**caractérisé par le fait**
**que** le cliquet de blocage (310) est accessible depuis l'extérieur, et peut être mû manuellement vers son emplacement de libération.

15. Dispositif de verrouillage selon l'une des revendications 1 à 14,
**caractérisé par**
la présence d'un système de maniement (332), doté d'un troisième système (340) à ressorts qui est affecté au second élément de manoeuvre (260).

16. Dispositif de verrouillage selon l'une des revendications 1 à 15,
**caractérisé par le fait**
**que** le système de déclenchement (221) est muni d'une cheville de déclenchement (222).

17. Dispositif de verrouillage selon la revendication 16,
**caractérisé par le fait**
**que** la cheville de déclenchement (222) est précontrainte, en son emplacement de déclenchement, au moyen du premier système (230) à ressorts.

18. Dispositif de verrouillage selon l'une des revendications 1 à 17,
**caractérisé par le fait**
**qu'**un système (160) indicateur de verrouillage est prévu sur une paroi (102 à 108) du boîtier.

19. Dispositif de verrouillage selon l'une des revendications 1 à 18,
**caractérisé par le fait**
**que** deux éléments de guidage (152, 154), se dressant verticalement et flanquant le crochet de verrouillage (110), sont implantés sur la paroi de recouvrement (102).

20. Dispositif de verrouillage selon la revendication 19,
**caractérisé par le fait**
**que** les éléments de guidage (152, 154) sont reliés l'un à l'autre à leur extrémité libre, au moyen d'un entretoisement.

21. Dispositif de verrouillage selon l'une des revendications 1 à 20,
**caractérisé par le fait**
**que** le système d'actionnement (210) est logé dans une cassette (200) de verrouillage de conteneurs, qui peut être insérée dans le boîtier (100) de verrouillage de conteneurs.

22. Boîtier (100) de verrouillage de conteneurs, dédié à la réception d'une cassette (200) de verrouillage de conteneurs et comprenant au moins une paroi de recouvrement (102), deux parois latérales (104, 106), une paroi postérieure (108) et un crochet de verrouillage (110) qui traverse ladite paroi de recouvrement (102) et est doté d'un corps (112), d'un élément d'accrochage (111) et d'un axe de rotation (114) occupant une position fixe par rapport audit boîtier (100) de verrouillage de conteneurs, et autour duquel ledit crochet de verrouillage (11) peut pivoter vers une position d'attente et vers une position de verrouillage,
**caractérisé par le fait**
**que** l'axe de rotation (114) du crochet de verrouillage (110) est disposé parallèlement à la paroi de recouvrement (102), et
**qu'**un support de pivotement (140), dévolu au montage pivotant dudit crochet de verrouillage (110), est prévu sur une paroi (102, 104, 106, 108) dudit boîtier.

23. Cassette (200) de verrouillage de conteneurs conçue pour être insérée dans un boîtier (100) de verrouillage de conteneurs,
**caractérisée par le fait**
**qu'**elle présente une platine de montage (202) sur laquelle sont implantés trois groupes structurels (220, 250, 330) formant un système d'actionnement (210) dédié à un crochet de verrouillage (110),
sachant qu'un premier groupe structurel (220) est pourvu d'un système de déclenchement (221) comportant un premier système (230) à ressorts,
sachant qu'un deuxième groupe structurel (250) est muni d'un premier élément de manoeuvre (290) et d'un second élément de manoeuvre (260) apte à coulisser parallèlement à ladite platine de montage (202), et comporte un deuxième système (280) à ressorts, et
sachant qu'un troisième groupe structurel (330) est doté d'un système de maniement (332) affecté au(x)dit(s) premier et/ou second (260) élément(s) de manoeuvre, et comporte un troisième système (340) à ressorts.

24. Ensemble de dispositifs de verrouillage (10) conformes à la revendication 1 et placés sur une surface (32) de chargement de conteneurs, lesdits dispositifs de verrouillage (10) étant agencés par paires respectives sur le bord de ladite surface de chargement (32), en vis-à-vis les uns des autres,
**caractérisé par le fait**
**que** les éléments d'accrochage (111) de chaque paire (12) de dispositifs pointent dans des directions opposées.
